# EUROPEAN PATENT APPLICATION

(11) **EP 4 825 472 A1**
(43) Date of publication of application: **21.10.2026**
(21) Application number: 24903275.6
(22) Date of filing: 20.09.2024
(51) Int. Cl.: B01D 53/62, B01D 53/50, B01D 53/68, B01D 53/82, B01D 53/83, B01D 53/96, B01J 20/08, C01B 32/50

(54) **EXHAUST GAS PRETREATMENT FACILITY, EXHAUST GAS TREATMENT FACILITY, AND CO2 SEPARATION/RECOVERY METHOD FOR EXHAUST GAS PRETREATMENT FACILITY**

(30) Priority: 14.12.2023 JP 2023211401
(71) Applicant: JFE Engineering Corporation, Chiyoda-ku, Tokyo 100-0011 (JP); Tohoku University, Sendai-shi, Miyagi 980-8577 (JP); Kurita Water Industries Ltd., Tokyo 164-0001 (JP)
(72) Inventor: YAMAMOTO, Hiroshi, Tokyo 100-0011 (JP); MORISHITA, Keiju, Tokyo 100-0011 (JP); KITAYAMA, Shuhei, Tokyo 100-0011 (JP); KATAGIRI, Ryusuke, Tokyo 100-0011 (JP); YOSHIOKA, Toshiaki, Sendai-shi, Miyagi 980-8577 (JP); KAMEDA, Tomohito, Sendai-shi, Miyagi 980-8577 (JP); MORI, Kouichi, Tokyo 164-0001 (JP); ITOU, Ichirou, Tokyo 164-0001 (JP)
(74) Representative: Twelmeier Mommer & Partner
(86) International application number: PCT/JP2024/033695
(87) International publication number: WO 2025/126612

(57) **Abstract**

A pre-treatment equipment for exhaust gas disposed on the entrance side of a CO₂ separation and recovery equipment, which separates and recovers CO₂ from combustion exhaust gas is provided. This equipment comprises an LDH reaction tower filled with layered double hydroxide LDH and a gas cooling tower that cools the combustion exhaust gas discharged from the LDH reaction tower using cooling water. This enables efficient removal of acidic gas components from the exhaust gas during CO₂ separation and recovery from waste incinerators and coal-fired power plants, while minimizing equipment and operating costs.

## Description

### Technical Field

The present invention relates to an exhaust gas pre-treatment equipment, an exhaust gas treatment equipment, and a CO₂ separation/recovery method for the exhaust gas pre-treatment equipment. It is particularly suitable for use in waste incineration plants, including those for waste containing garbage, and coal-fired power plant. This relates to an exhaust gas pre-treatment equipment capable of removing or reducing acidic gases in exhaust gas to a predetermined concentration when separating and recovering carbon dioxide (CO₂) contained in combustion exhaust gas; an exhaust gas treatment equipment equipped with the exhaust gas pre-treatment equipment; and a CO₂ separation and recovery method for the exhaust gas pre-treatment equipment.

### Background Art

During operation of waste incineration plants equipped with systems that incinerate waste containing garbage and recover heat from the waste heat to generate electricity, coal-fired power plants and so on, exhaust gas finally discharged from their stacks contains a significant amount of CO₂. In recent years, preventing global warming has become crucial, and reducing CO₂ emissions is an urgent priority.

There are currently several equipments in Japan that recover CO₂ from exhaust gas at waste incineration plants. For CO₂ recovery, a chemical absorption, a physical adsorption and the like are used. In the chemical absorption, an aqueous solution of an amine with CO₂ absorption properties is used to separate CO₂ from the exhaust gas, and then the CO₂ is recovered by desorbing CO₂ from the amine solution through heating. In the physical adsorption, CO₂ is adsorbed onto an adsorbent material capable of adsorbing CO₂ under specified high pressure, and subsequently the CO₂ is desorbed from the adsorbent under reduced pressure to recover CO₂. Both the chemical absorption and physical adsorption target exhaust gases at 40 to 60°C, so exhaust gases above 100°C must be cooled beforehand using a gas cooling tower, such as by wet gas cooling.

It is known that the amine aqueous solution used in the chemical absorption and the adsorbent used in the physical adsorption are prevented from absorbing or adsorbing CO₂ due to the influence of acidic gases such as sulfur dioxide (SO₂) contained simultaneously in the exhaust gas. In particular, SO₂ has a higher affinity for amine solutions or adsorbents than CO₂. Taking the chemical absorption as an example, SO₂ will not desorb unless the amine solution that absorbed CO₂ at a higher temperature than CO₂ is heated. Therefore, if the temperature of the amine solution is not raised to the SO₂ desorption temperature for economic reasons or other factors, SO₂ will always remain trapped in the amine solution. This reduces CO₂ absorption capacity and is undesirable. Additionally, hydrogen chloride (HCl), which is simultaneously included as an acidic gas, raises concerns about adverse effects such as equipment corrosion. It is also undesirable to introduce this into the CO₂ separation and recovery equipment. Furthermore, when an amine aqueous solution that has absorbed acidic gases such as SO₂ is heated at the CO₂ desorption temperature, trace amounts of SO₂ desorb. Consequently, these acidic gas components become impurities contained within the recovered CO₂. This raises concerns that when reusing recovered CO₂ as raw material for other product manufacturing, the quality of CO₂ recycled products may deteriorate, or the manufacturing process may be adversely affected by catalyst poisoning or degradation, which is also undesirable.

Therefore, equipment is required to remove or reduce acidic gases in the exhaust gas to a specified concentration. Methods for removing acidic gases include dry treatment and wet treatment. In the dry treatment, alkaline desulfurization agents such as slaked lime are sprayed upstream of the dust collector. In the wet treatment, alkaline aqueous solutions such as caustic soda solution are circulated in counterflow against the exhaust gas. For CO₂ separation and recovery equipment, using such as chemical absorption, the target concentration of acidic gas components in the exhaust gas is often less than 3 ppm. Therefore, the wet treatment, which excels in acidic gas removal capability, is typically employed. However, selecting the wet treatment results in a large volume of wastewater after exhaust gas treatment. Consequently, the required wastewater treatment equipments become larger, and a discharge destination must be secured, leading to increased costs, which is undesirable.

Furthermore, Patent Document 1 discloses a method employing the dry treatment for removing acidic gases from the exhaust gases. In this case, a large amount of desulfurization agent must be injected to reduce the acidic gas concentration to a low level. This results in increased costs and generates a large volume of desulfurization residue requiring landfill disposal. This poses the problem of reducing the remaining lifespan of landfill sites, making it undesirable.

Furthermore, when cooling exhaust gas in a gas cooling tower, methods such as indirect air cooling or mixing ambient air to suppress the condensation of moisture contained in the exhaust gas and thereby reduce condensate water generation are also disclosed. However, this method increases volume of the exhaust gas introduced into the CO₂ separation and recovery equipment, necessitating larger equipment scale and resulting in increased installation costs and space requirements, which is undesirable. Furthermore, the CO₂ concentration in the exhaust gas decreases, reducing CO₂ recovery efficiency in the CO₂ separation and recovery process. This also leads to equipment expansion, presenting another undesirable issue.

### Citation List

### Patent Literature

Patent Literature 1: Japanese Patent Application Laid-Open No. 2023-17514

### Summary of Invention

### Technical Problem

As a material capable of reducing HCl and sulfur dioxide (SOx) contained in incineration exhaust gas to low levels required by CO₂ separation and recovery equipment, there is a layered double hydroxide (LDH). This LDH consists of magnesium (Mg), aluminum (Al), and hydroxide (OH), with positively charged crystals stacked in layers. Between these layers exist negatively charged anions and interlayer water. Typically, this negative ion is most stable in the form of a carbonate ion, and carbonate-type LDH exists in nature. When exhaust gas containing acidic gases is brought into contact with this carbonic acid-type LDH, a reaction occurs where the carbonate ions between the LDH layers exchange with the chloride ions in the HCl in case of HCI, enabling removal of acidic gases. Utilizing this property, passing exhaust gas through a layer packed with an appropriate amount of LDH achieves acidic gas removal efficiency equivalent to or exceeding that of wet treatment methods.

The concentration of acidic gases in combustion exhaust gases, for example in waste incineration plants, is typically 200 to 300 ppm of HCl before removal treatment. Dry treatment is commonly employed in typical waste incineration plants. This treatment removes acidic gases by injecting an alkaline desulfurization agent, such as slaked lime, upstream of the dust collector, causing it to deposit onto the filter cloth within the dust collector. It is common practice to inject slaked lime or similar agents to reduce the HCl concentration in the exhaust gas from the dust collector outlet to 50 ppm or less after removal. When introducing part or all of this exhaust gas into a CO₂ separation and recovery equipment, it is necessary to remove acidic gases to below 3 ppm. Here, LDH with acid gas removal capabilities equal to or exceeding those of wet treatment methods can be applied. Simply passing exhaust gas containing acid gases through a packing layer containing this deposited LDH enables reduction of acid gas concentrations to levels required by CO₂ separation and recovery equipment without generating wastewater. This completes the removal of acidic gases as a pre-treatment for CO₂ separation and recovery. At this point, by providing a gas cooling tower downstream of the LDH reaction tower containing the LDH packing layer, the condensate water generated contains almost no acidic gas components. Consequently, there is minimal pH value reduction in the condensate water due to acidic gas components. This allows for a reduction in adding amount of alkaline solutions, such as caustic soda solution, required for pH value adjustment before discharge, thereby reducing wastewater volume.

Furthermore, since adding air for gas cooling is unnecessary, it is possible to feed the gas to the CO₂ separation and recovery equipment without increasing exhaust gas volume. It is desirable that the size of the CO₂ separation and recovery equipment does not increase, nor does the equipment or installation space expand. Since the installation space does not expand, it is advantageous for retrofitting into existing waste incineration plants with limited available space, for example.

The present invention was conceived in light of the above circumstances. Its first objective is to provide an exhaust gas pre-treatment system that enables efficient removal of acidic gas components from the exhaust gas at low equipment and operating costs when providing CO₂ separation and recovery equipment in waste incineration plants, coal-fired power plants, and similar plants.

The second objective of the present invention is to provide an exhaust gas pre-treatment system that facilitates the retrofitting of CO₂ separation and recovery equipment into existing waste incineration plants, coal-fired power plants, and similar plants.

The third objective of the present invention is to provide an exhaust gas treatment equipment in which a CO₂ separation and recovery equipment is installed within a main line extending from an incinerator or a boiler to a stack.

The fourth objective of the present invention is to provide a CO₂ separation and recovery method for exhaust gas pre-treatment equipment suitable for use in regeneration or replacement of LDH.

### Solutions to Problem

The present invention achieves the first objective by providing an exhaust gas pre-treatment equipment disposed on the inlet side of a CO₂ separation and recovery equipment for separating and recovering CO₂ from combustion exhaust gas characterized by comprising, an LDH reaction tower filled with layered double hydroxide (LDH) and a gas cooling tower for cooling the combustion exhaust gas discharged from the LDH reaction tower using cooling water.

Here, the LDH can be made into granular form, for example, with a diameter of 0.5 to 4 mm, preferably 1.0 to 2.5 mm, to enhance its air permeability.

Furthermore, the LDH reaction tower is packed with the LDH, such that the LDH moves from top to bottom, enabling the regeneration of fully adsorbed LDH and its subsequent supply from upper part of the LDH reaction tower, thereby allowing the LDH to be used in a circulating manner.

Additionally, the upper part of the LDH reaction tower may be equipped with an LDH supply device for replenishing the LDH with acid gas removal capability, while the lower part may be equipped with an LDH cutter for cut-outing the LDH that has completed acid gas adsorption, and an LDH discharge device for discharging the cut-out LDH.

Furthermore, the cut-out amount of the LDH cutter may be controlled according to the pH value of the condensate water in the condensate water tank of the gas cooling tower, or according to the supply amount of the pH adjusting agent supplied to the condensate water tank.

Furthermore, a regeneration tank for performing the regeneration may be provided at the bottom of the LDH reaction tower, enabling the equipment to be compact.

Furthermore, the second objective is achieved by providing the exhaust gas pre-treatment equipment in a bypass line connected to the main line extending from an incinerator or a boiler to a stack.

Furthermore, the third objection is achieved, by providing the exhaust gas pre-treatment equipment within a main line extending from an incinerator or a boiler to a stack, to eliminate the need for a bypass line.

The present invention further achieve the fourth objective in a CO₂ separation and recovery method using the exhaust gas pre-treatment equipment by monitoring a pH value of a cooling water in the gas cooling tower, and performing regeneration or replacement of the LDH when the pH value falls below a predetermined value.

Alternatively, in the CO₂ separation and recovery method using the exhaust gas pre-treatment equipment, an adding amount of a pH adjusting agent determined from the pH value of the cooling water in the gas cooling tower is monitored and, the LDH is regenerated or replaced when the adding amount exceeds a predetermined value, thereby also achieving the objective.

### Advantageous Effect of Invention

According to the present invention, it is possible to efficiently remove gases such as HCl gas, which corrodes the CO₂ separation and recovery equipment, and SO₂ gas, which selectively binds to the adsorbent over CO₂, without using wet treatment methods. Furthermore, it is possible to maintain the pH value of the exhaust gas condensate water discharged from the gas cooling tower installed downstream of the LDH reaction tower near neutral. Therefore, it becomes possible to reduce the adding amount of pH adjusters such as caustic soda solution traditionally used, thereby lowering equipment costs and operating expenses.

### Brief Description of Drawings

FIG. 1 shows the overall configuration of a first embodiment of the present invention
FIG. 2 is an enlarged cross-sectional view showing the main components of the first embodiment.
FIG. 3 is a cross-sectional view showing the operation within the LDH reaction tower of the first embodiment.
FIG. 4 is a diagram showing the overall configuration of a second embodiment of the present invention.
FIG. 5 is a diagram showing the overall configuration of a third embodiment of the present invention.

### Description of Embodiments

Embodiments of the present invention will be described in detail below with reference to the drawings. Note that the present invention is not limited to the description of the following embodiments or practical examples. The components of the embodiments and practical examples described below include ones easily conceivable by those skilled in the art, substantially identical ones, and ones within the so-called range of equivalency. The components of the embodiment and practical examples described below may be combined as appropriate, or selected and used as appropriate.

First, we will describe an exhaust gas treatment system to which the present invention is applied.

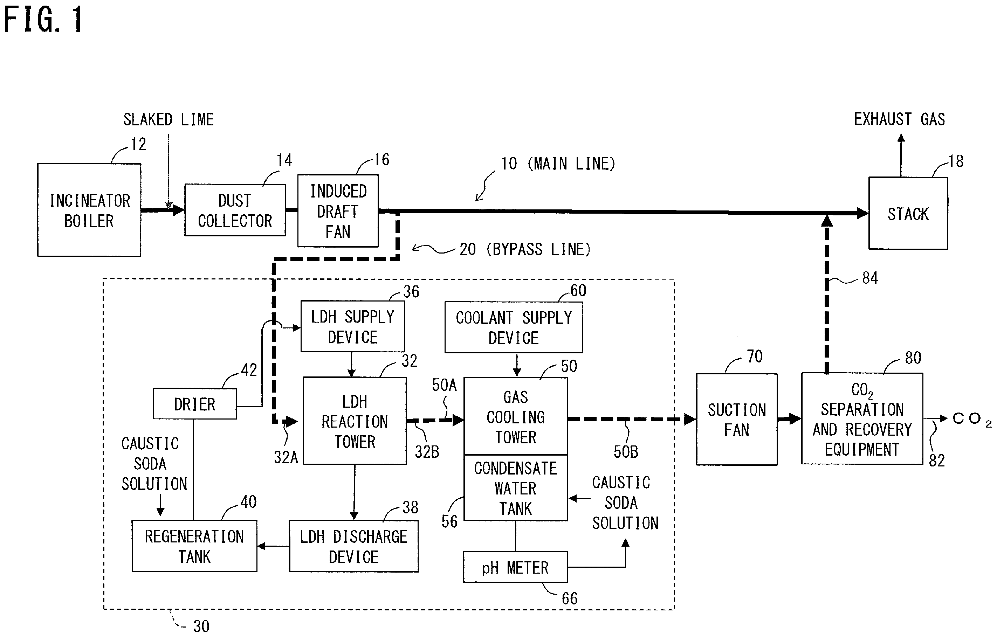

As shown in FIG. 1, the exhaust gas treatment system has a main line 10 (shown as a thick solid line) which is connected to a stack 18 via a dust collector 14, a denitrification reaction tower (not shown), an induced draft fan 16, etc., from an incinerator or a boiler 12 and through which the exhaust gas discharged into the atmosphere flows.

In the exhaust gas treatment system described above, the first embodiment of the present invention is provided with a bypass line 20 (shown by thick dashed lines) between a flue gas duct downstream of the dust collector 14, into which a desalination agent such as slaked lime is sprayed, and the induced draft fan 16, and the stack 18. Then, some or all of the exhaust gas is drawn into the bypass line 20 by a suction fan 70. The bypass line 20 is provided with an exhaust gas pre-treatment equipment 30 according to the present invention, the suction fan 70, and a known CO₂ separation and recovery equipment 80. This CO₂ separation and recovery equipment 80 is equipped with a flue gas duct 82 for recovering the separated and recovered CO₂, and a flue gas duct 84 for returning the exhaust gas after CO₂ removal to the main line 10.

The exhaust gas pre-treatment equipment 30 primarily comprises a LDH reaction tower 32 according to the present invention and a gas cooling tower 50. The exhaust gas drawn into the exhaust gas pre-treatment equipment 30 is first circulated through the LDH reaction tower 32.

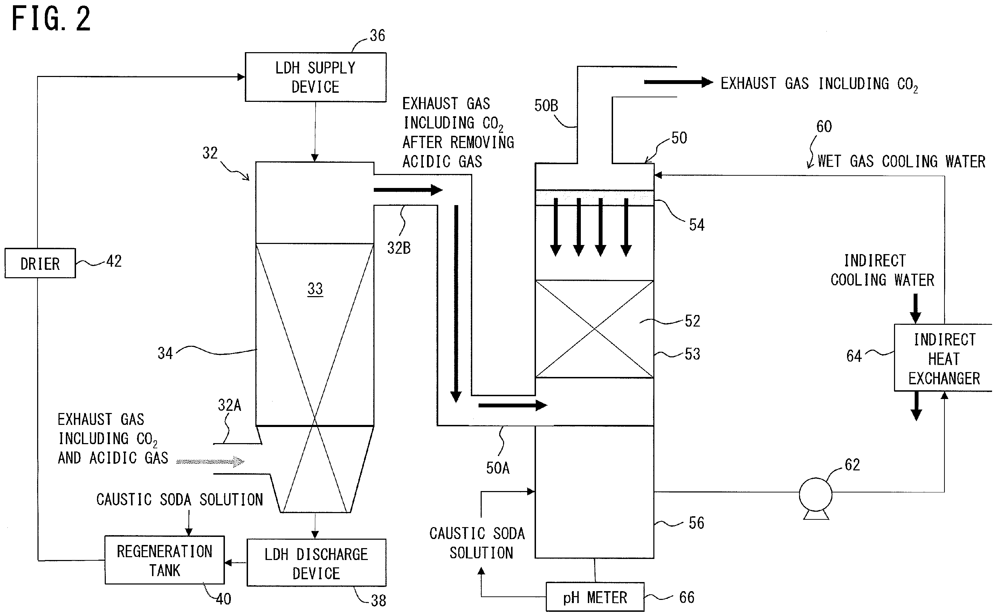

As shown in detail in FIG. 2, the LDH reaction tower 32 comprises an exhaust gas introduction section 32A for introducing exhaust gas containing acidic gas, and an exhaust gas discharge section 32B for discharging the exhaust gas after removal of the acidic gas. The exhaust gas introduced into the LDH reaction tower 32 is introduced from the exhaust gas introduction section 32A at the lower part of the LDH reaction tower 32. And the exhaust gas after acid gas removal is discharged from the exhaust gas discharge section 32B at the upper part of the LDH reaction tower 32. Note that introducing from the top and discharging from the bottom does not change the acid gas removal efficiency, either is acceptable.

Inside the LDH reaction tower 32, a LDH packing layer 34 is provided. In the LDH packing layer 34, LDH granules 33 of a predetermined granule size, for example, 0.5 to 4 mm in diameter, preferably 1.0 to 2.5 mm in diameter, are packed in a predetermined amount, for example, such that the space velocity SV (= gas flow rate / packed volume: unit h⁻¹) = (1,000 to 10,000 h⁻¹, preferably 1,500 to 3,000 h⁻¹).Here, when the space velocity SV is low, the LDH packing volume increases relative to the gas flow rate, enabling longer acid gas removal times per filling cycle. On the other hand, increasing the LDH packing volume leads to larger acid gas treatment equipment, which is undesirable from the perspective of minimizing device costs and installation area. To reduce device costs, it is desirable to increase the space velocity SV and thereby reduce the LDH packing amount = packing volume. Therefore, acid gas treatment equipment designed to operate within a spatial velocity range of 1,000 to 10,000 h⁻¹- preferably 1,500 to 3,000 h⁻¹-is optimal for simultaneously ensuring sufficient treatment time while minimizing device costs and installation footprint.

Furthermore, as the granule size of the LDH granules 33 decreases, the smaller gaps during packing cause the differential pressure between the inlet and outlet gases of the LDH reaction tower 32 to increase, leading to higher power consumption by the suction fan 70, which is undesirable. On the other hand, the increased specific surface area of the LDH material yields favorable results by improving acid gas removal efficiency. In the example, when the LDH granule size was 3.0 mm, the inlet/outlet gas differential pressure across the LDH reaction tower 32 was 0.4 to 0.5 kPa. Since a differential pressure up to approximately 1.0 kPa poses no problem for the power consumption of the suction fan 70, an LDH granules size of 1.0 mm to 2.5 mm is desirable.

Upper portion of the LDH reaction tower 32 is provided with an LDH supply device 36 for replenishing the LDH with acid gas removal capability, while lower portion is equipped with an LDH discharge device 38 for discharging the LDH from which acid gas adsorption is completed.

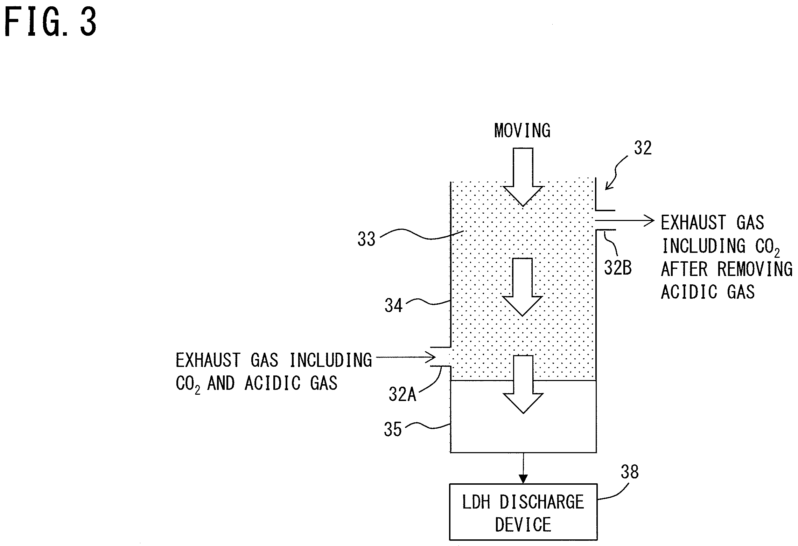

FIG. 3 shows an example of a moving state of LDH granules 33 within the LDH reaction tower 32. LDH granules 33 supplied from above into the LDH reaction tower 32 move downward within the LDH reaction tower 32 while being cut by a LDH cutter 35 provided at the bottom. At this point, exhaust gas supplied from below reacts with the LDH granules 33 and clean gas is discharged from above.

A cut-out amount of the LDH cutter 35 in the LDH discharge device 38 can be controlled, as described later, based on, for example, the pH value in a condensate water tank 56 of the gas cooling tower 50, or the supply amount of the pH adjusting agent (e.g., an alkaline aqueous solution such as caustic soda solution) supplied to the condensate water tank 56.

The LDH discharged from the LDH discharge device 38 is introduced into a regeneration tank 40 where an alkaline aqueous solution, such as a caustic soda solution, is supplied, and is regenerated. Afterwards, it is dried by passing through a dryer 42, and supplied to the LDH supply device 36, and recycled for reuse. This reduces the consumption of the expensive LDH.

Next, as shown in FIG. 2, the exhaust gas, from which the acidic gas has been removed by flowing through the LDH reaction tower 32, is introduced into a gas inlet 50A at the bottom of the gas cooling tower 50, which is provided downstream of the LDH reaction tower 32.

The gas cooling tower 50 comprises a filler layer 53 filled with a filler material 52 for performing heat exchange internally. Cooling water flows down from a cooling water dispersion plate 54 provided above the filler layer 53 and is collected in the condensate water tank 56.

The filler material 52 may be, for example, a pall ring made of metal, preferably stainless steel. Note that the amount of acidic gas is reduced by the preceding LDH reaction tower 32. Therefore, expensive materials such as SUS316 or 316L are unnecessary; the more affordable SUS304 is sufficient. It is also preferable to use a smaller diameter for this pall ring, provided the differential pressure does not exceed the specified value.

Condensate water collected in the condensate water tank 56 is cooled by indirect cooling water in an indirect heat exchanger 64, for example by use of a pump 62 of a cooling water supply device 60. It is then supplied to the top of the gas cooling tower 50 as wet gas cooling water. In this gas cooling tower 50, continuously exposing the wet gas cooling water to the high-temperature exhaust gas causes the wet gas cooling water temperature to rise, reducing cooling efficiency. Therefore, to prevent this, the wet gas cooling water is cooled in the indirect heat exchanger 64.

As shown in FIG. 2, in the gas cooling tower 50, cooling water is sprayed to cool the exhaust gas at 100°C or higher, for example around 160°C, to approximately 40 to 60°C. By spraying the cooling water, the exhaust gas is directly contacted with the cooling water and its temperature is lowered. Then, the condensate water generated by condensation of moisture in the exhaust gas is collected in the condensate water tank 56, which can hold the condensate water for a short time.

At this point, if sufficient acidic gas has been removed in the LDH reaction tower 32, the pH value of this condensate water will be near neutral. However, as the acidic gas adsorption capacity of the LDH granules 33 decreases and amount of the acidic gas introduced into the gas cooling tower 50 increases, the pH value of the condensate water will decrease toward the acidic side. This phenomenon can be utilized to monitor the pH value of condensate water using a pH meter 66, thereby managing the regeneration or replacement timing of the LDH granules 33. Alternatively, the adding amount of alkaline solutions-such as caustic soda solution-used as pH adjusters injected when the pH value shifts toward the acidic side can be monitored and managed. This also enables management of the regeneration or replacement timing for the LDH granules 33. Here, providing the gas cooling tower 50 upstream of the LDH reaction tower 32 allows the exhaust gas containing acidic gases to be cooled through wet gas cooling with cooling water. Therefore, acidic components migrate into the condensate water, causing the pH value to decrease toward the acidic side. This leads to increased consumption of alkaline solutions such as caustic soda solution for neutralization treatment, resulting in both higher costs and increased condensate water volume, which is undesirable.

The exhaust gas cooled to a predetermined temperature, for example approximately 40 to 60°C, within the gas cooling tower 50 is supplied to the CO₂ separation and recovery equipment 80 via the suction fan 70 from the gas outlet 50B provided at the top of the gas cooling tower 50. The CO₂ recovered by this CO₂ separation and recovery equipment 80 is discharged through the flue gas duct 82, while the remaining exhaust gas is returned to the stack 18 of the main line 10 via the flue gas duct 84.

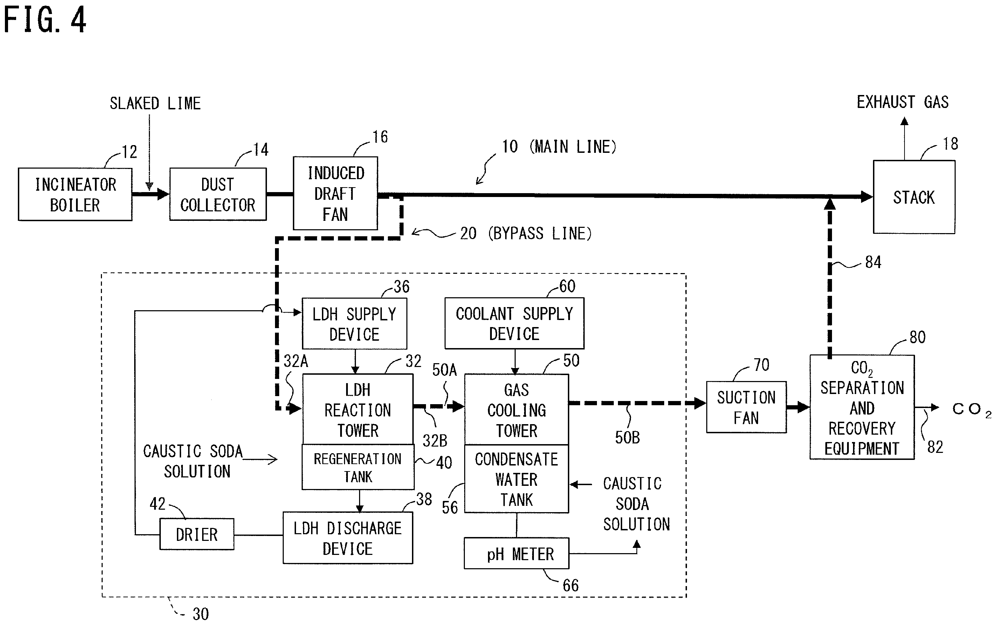

FIG. 4 shows a second embodiment of the present invention. This second embodiment downsizes the exhaust gas pre-treatment equipment 30 provided in the bypass line 20, similar to the first embodiment, by placing the regeneration tank 40 directly below the LDH reaction tower 32.

In this embodiment, the LDH granules 33 regenerated in the regeneration tank 40 are discharged outside the LDH reaction tower 32 by the LDH discharge device 38. They are then dried in the dryer 42 and supplied to the LDH supply device 36 for reuse in the cycle.

The other configurations and functions are the same as in the first embodiment, so the explanation is omitted.

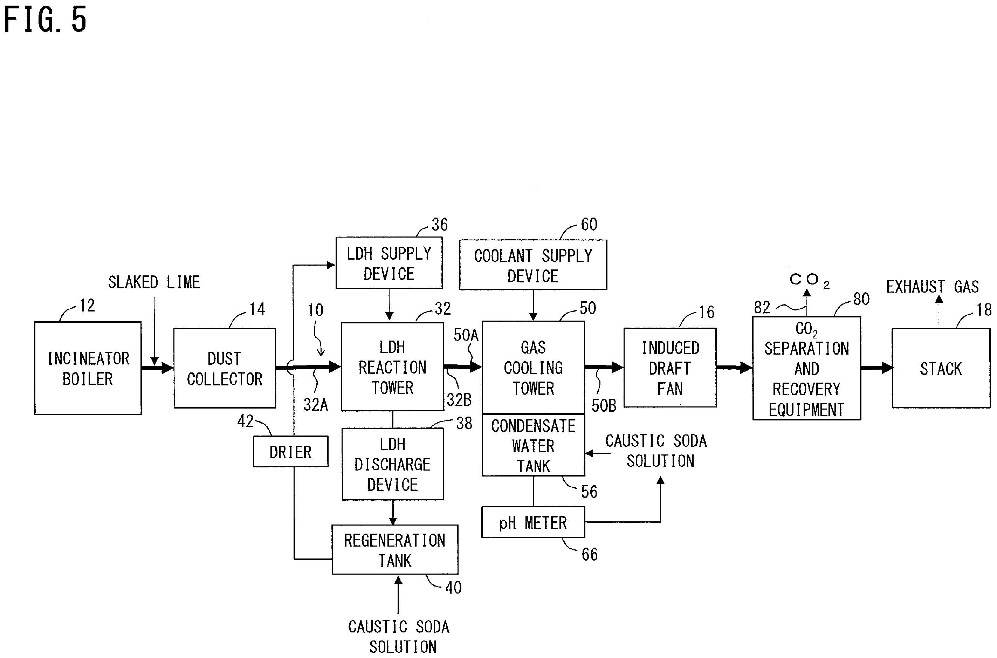

FIG. 5 shows a third embodiment of the present invention, wherein the LDH reaction tower 32 and the gas cooling tower 50 are provided within the main line 10 instead of the bypass line 20.

The other configurations and functions are the same as in the first embodiment, so the explanation is omitted.

According to this embodiment, the present invention can be implemented without providing the bypass line 20.

In the aforementioned embodiments, since both include the regeneration tank 40 and the dryer 42, the LDH granules 33 can be regenerated and recycled, resulting in high economic efficiency. Alternatively, it is possible to omit the regeneration tank 40 and the dryer 42 and use up all the LDH granules 33.

In the aforementioned embodiments, the LDH filled into the LDH reaction tower 32 was LDH granules 33, and a moving bed was formed within the LDH reaction tower 32. However, it is not necessarily required to use the LDH granules 33, and the moving bed need not be formed within the LDH reaction tower 32.

Furthermore, the configuration of the gas cooling tower 50 is not limited to one that uses the indirect heat exchanger 64.

The exhaust gas temperature at various points is just one example.

Note that while the preceding description of the present invention is applied to the pre-treatment for CO₂ separation and recovery from exhaust gas in waste incineration plants for municipal solid waste and the like, the scope of application of the present invention is not limited thereto. For example, it can similarly be applied to the pre-treatment of CO₂ separation and recovery for exhaust gases from plants such as coal-fired power plants.

### Industrial Applicability

When separate and recover carbon dioxide CO₂ included in a combustion exhaust gas in waste incineration plants for waste including garbage, coal-fired power plants, and so on, an exhaust gas pre-treatment equipment efficiently remove with low equipment and operating costs can be provided.

### Reference Signs List

10 ... Main Line
12 ... Incinerator/Boiler
14 ... Dust Collector
16 ... Induced Draft Fan
18 ... Stack
20 ... Bypass Line
30 ... Exhaust Gas Pre-treatment Equipment
32 ... LDH Reaction Tower
33 ... LDH Granules
34 ... LDH Packing Layer
36 ... LDH Supply Device
38 ... LDH Discharge Device
40 ... Regeneration tank
42 ... Dryer
50 ... Gas Cooling Tower
52 ... Filler Material
53 ... Filler Material Filled Layer
54 ... Cooling Water Dispersion Plate
56 ... Condensate Water Tank
60 ... Cooling Water Supply Device
64 ... Indirect Heat Exchanger
66 ... pH Meter
70 ... Suction Fan
80 ... CO₂ Separation and Recovery Equipment

## Claims

1. An exhaust gas pre-treatment equipment disposed on an inlet side of a CO₂ separation and recovery equipment for separating and recovering CO₂ from combustion exhaust gas,
**characterized by** comprising:
an LDH reaction tower filled with layered double hydroxide LDH, and
a gas cooling tower for cooling the combustion exhaust gas discharged from the LDH reaction tower with cooling water.

2. The exhaust gas pre-treatment equipment according to claim 1, wherein the LDH is made into granular form.

3. The exhaust gas pre-treatment equipment according to claim 2, wherein diameter of the LDH granules is 0.5 to 4 mm, preferably 1.0 to 2.5 mm.

4. The exhaust gas pre-treatment equipment according to claim 1, wherein the LDH reaction tower is packed with the LDH, such that the LDH moves from top to bottom, and an adsorbed LDH is regenerated and made available for supply from upper part of the LDH reaction tower.

5. The exhaust gas pre-treatment equipment according to claim 4, further comprising
an LDH supply device for replenishing the LDH with acid gas removal capability provided at upper part of the LDH reaction tower, and
an LDH cutter for cut-outing the LDH that has completed acid gas adsorption and an LDH discharge device for discharging the cut-out LDH both provided at lower part of the LDH reaction tower.

6. The exhaust gas pre-treatment equipment according to claim 5, wherein the cut-out amount of the LDH cutter is controlled according to a pH value of the condensate water in the condensate water tank of the gas cooling tower, or the supply amount of a pH adjusting agent supplied to the condensate water tank.

7. The exhaust gas pre-treatment equipment according to claim 4, further comprising a regeneration tank for performing the regeneration provided at lower part of the LDH reaction tower.

8. An exhaust gas treatment equipment **characterized in that** the exhaust gas pre-treatment equipment according to claim 1 is provided in a bypass line connected to a main line extending from an incinerator or a boiler to a stack.

9. An exhaust gas treatment equipment **characterized in that** the exhaust gas pre-treatment equipment according to claim 1 is provided within a main line extending from an incinerator or a boiler to a stack.

10. A CO₂ separation and recovery method using the exhaust gas pre-treatment equipment according to any one of claims 1 to 7, **characterized by** monitoring a pH value of a cooling water in the gas cooling tower and performing regeneration or replacement of the LDH when the pH value falls below a predetermined value.

11. A CO₂ separation and recovery method using the exhaust gas pre-treatment equipment according to any one of claims 1 to 7, **characterized by** monitoring an adding amount of a pH adjusting agent determined from the pH value of the cooling water in the gas cooling tower, and performing regeneration or replacement of the LDH when the adding amount exceeds a predetermined value.
